# EUROPEAN PATENT APPLICATION

(11) **EP 2 579 621 A1**
(43) Date of publication of application: **10.04.2013**
(21) Application number: 12006917.4
(22) Date of filing: 05.10.2012
(51) Int. Cl.: H04W 4/00

(54) **Method of reducing message transmission between DM client and DM server and related communication device**

(30) Priority: 05.10.2011 US 201161543318 P
(71) Applicant: HTC Corporation, Taoyuan County 330 (TW)
(72) Inventor: Yu, Chun-Ta, Taoyuan City Taoyuan County 330 (TW); Tseng, Yin-Yeh, Taoyuan City Taoyuan County 330 (TW)
(74) Representative: Carstens, Dirk Wilhelm

(57) **Abstract**

A method of reducing message transmission for a device management (DM) client in a service system is disclosed. The method comprises generating a message comprising data and an identifier, and the identifier indicating a DM server of the service system to not reply a result of processing the data; and transmitting the message to the DM server, for the DM server to process the data.

## Description

### Cross Reference To Related Applications

This application claims the benefit of U.S. Provisional Application No. 61/543,318, filed on Oct. 5, 2011 and entitled "Effective Update Method for DM Client to DM Server", the contents of which are incorporated herein in their entirety.

### Background of the Invention

### 1. Field of the Invention

The present invention relates to a method used in a service system and related communication device, and more particularly, to a method of reducing message transmission between a device management (DM) client and a DM server and related communication device.

### 2. Description of the Prior Art

Open Mobile Alliance (OMA) is founded to develop OMA specifications for mobile services to meet users' needs. Furthermore, the OMA specifications aim to facilitate providing of the mobile services which are interoperable across geographic areas (e.g. countries), operators, service providers, networks, operation systems and mobile devices. In detail, the mobile services conforming to the OMA specifications can be used by the users without being restricted to particular operators and service providers. The mobile services conforming to the OMA specifications are also bearer agnostic, i.e., the bearer that carries the mobile services can be a second generation (2G) mobile system such as Global System for Mobile Communications (GSM), Enhanced Data rates for GSM Evolution (EDGE) or General Packet Radio Service (GPRS), or a third generation (3G) and beyond mobile system such as Universal Mobile Telecommunications System (UMTS), Long Term Evolution (LTE) or LTE-Advanced (LTE-A). Further, the mobile services conforming to the OMA specifications can be executed on various operation systems such as Windows, Android or Linux operated on various mobile devices. Therefore, industries providing the mobile devices or the mobile services supporting the OMA specifications can benefit from a largely growing market enabled by interoperability of the mobile services. Besides, the users use the mobile devices or the mobile services supporting the OMA specifications can also have a better experience due to the interoperability of the mobile services.

In OMA Device Management (DM) requirement, a DM server is defined as an authorized legal entity which can manage one or more DM clients (e.g. mobile devices) by using a DM protocol conforming to the OMA specifications. In detail, the DM protocol defines a way according to which a packet, a message and/or a package (i.e., a combination of multiple messages transmitted in a same direction) is exchanged between the DM server and the DM client. The DM protocol also defines a way according to which the DM client can feedback a command, a status or a report to the DM server. Further, when using the DM protocol, the DM server manages the DM client through a set of management objects in the DM client. A management object may be small as an integer or large as a picture. Besides, the management object may conform to the DM protocol such as a Software Component Management Object (SCOMO), a Software and Application Control Management Object (SACMO) or a Firmware Update Management Object (FUMO).

In the DM 1.x protocol, two or more messages are needed to be exchanged between the DM client and the DM server during a complete communication. In detail, at least two messages are needed to accomplish a task (e.g., report a value of a node in the DM Client), wherein two messages are used for Package 1 and Package 2. However, in some cases, the DM Client just wants to perform a simple task such as reports a value to the DM Server, and two or more messages are still needed to be exchanged between the DM client and the DM server. Thus, how to reduce message transmission when performing the simple task is a topic to discussed and addressed.

### Summary of the Invention

The present invention therefore provides a method and related communication device for reducing message transmission between a device management (DM) client and a DM server to solve the abovementioned problem.

A method of reducing message transmission for a device management (DM) client in a service system is disclosed. The method comprises generating a message comprising data and an identifier, and the identifier indicating a DM server of the service system to not reply a result of processing the data; and transmitting the message to the DM server, for the DM server to process the data.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a service system according to an example of the present invention.

Fig. 2 is a schematic diagram of a communication device according to an example of the present invention.

Fig. 3 is a flowchart of a process according to an example of the present invention.

### Detailed Description

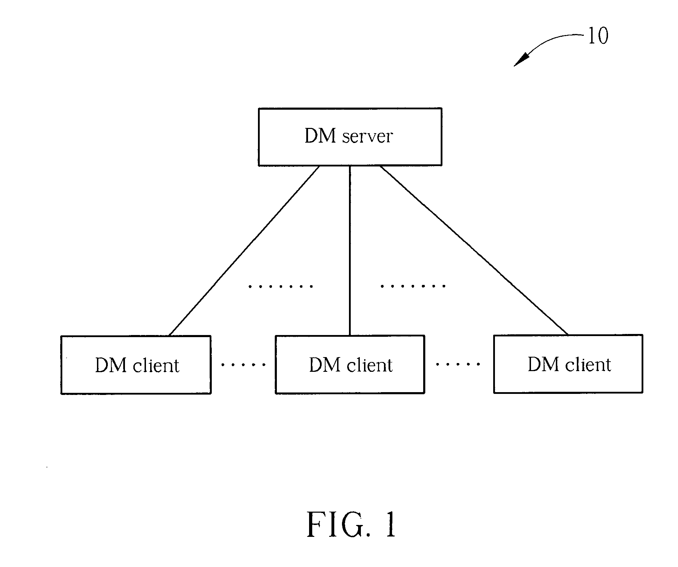

Please refer to Fig. 1, which is a schematic diagram of a service system 10 according to an example of the present invention. The service system 10 is briefly composed of a DM server and a plurality of DM clients supporting the device management (DM) 1.x protocol or its later versions developed by Open Mobile Alliance (OMA).

In Fig. 1, the DM clients and the DM server are simply utilized for illustrating a structure of the service system 10. Practically, the DM clients can be inatalled in desktops and home electronics which are fixed at a certain position. Alternatively, the DM clients can be installed in mobile devices such as mobile phones, laptops, tablet computers, electronic books, and portable computer systems. The service system can be bearer agnostic, i.e., the bearer used for exchanging information (e.g., message, request, response, etc.) between the DM clients and the DM server can be a second generation (2G) mobile system such as Global System for Mobile Communications (GSM), Enhanced Data rates for GSM Evolution (EDGE) or General Packet Radio Service (GPRS), a third generation (3G) and beyond mobile system such as Universal Mobile Telecommunications System (UMTS), Long Term Evolution (LTE) system or LTE-Advanced system, or even a wireline communication system such as an Asymmetric Digital Subscriber Line (ADSL).

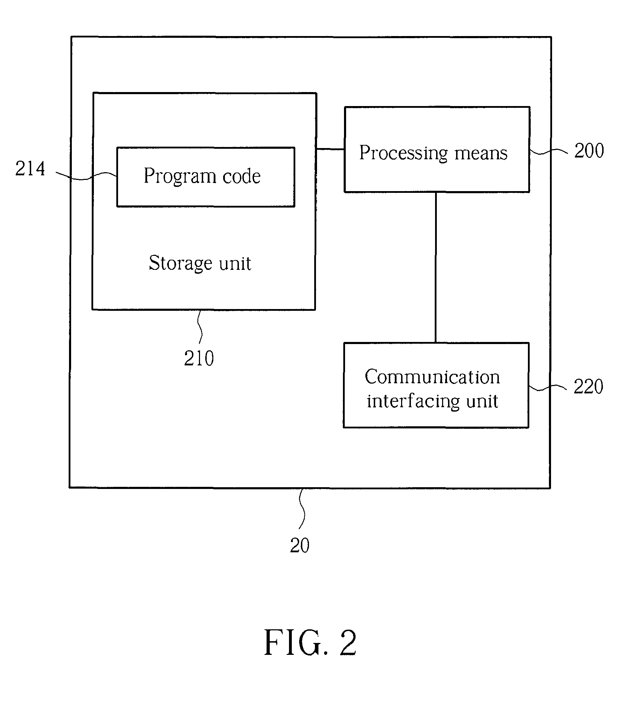

Please refer to Fig. 2, which is a schematic diagram of a communication device 20 according to an example of the present invention. The communication device 20 can be devices wherein a DM client or the DM server shown in Fig. 1 is installed. The communication device 20 may include a processing means 200 such as a microprocessor or an Application Specific Integrated Circuit (ASIC), a storage unit 210 and a communication interfacing unit 220. The storage unit 210 may be any (non-transitory) computer-readable storage medium that can store a program code 214, accessed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a transceiver, and can transmit/receive information (e.g., message, request, response, package, etc.) according to processing results of the processing means 200.

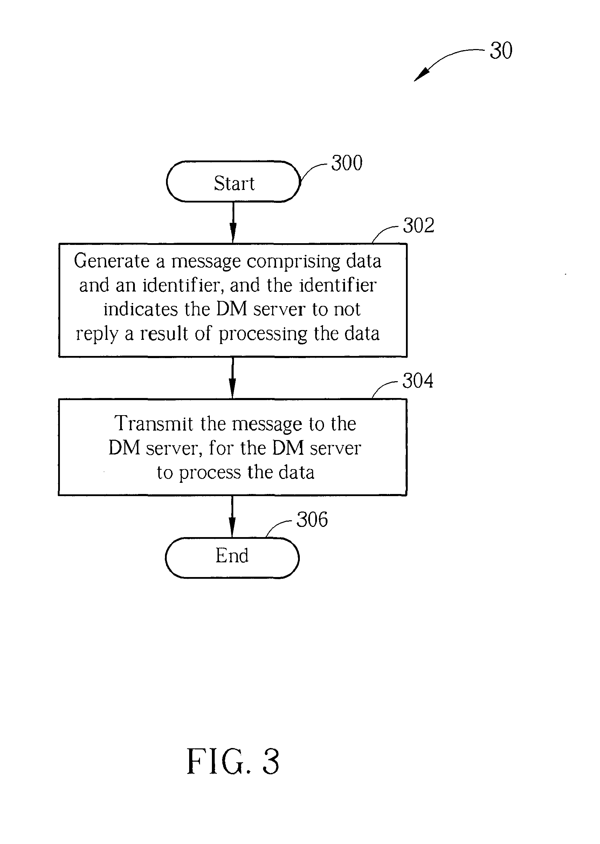

Please refer to Fig. 3, which is a flowchart of a process 30 according to an example of the present invention. The process 30 is utilized in a DM client shown in Fig. 1, for reducing signal transmission between the DM client and the DM server. The process 30 may be compiled into the program code 214 and includes the following steps:

Step 300: Start.

Step 302:Generate a message comprising data and an identifier, and the identifier indicates the DM server to not reply a result of processing the data.

Step 304: Transmit the message to the DM server, for the DM server to process the data.

Step 306: End.

According to the process 30, the DM client first generates a message comprising data and an identifier (e.g., tag or indication), and the identifier indicates the DM server to not reply a result of processing the data. Then, the DM client transmits the message to the DM server, for the DM server to process the data. Thus, only one message is needed to complete a communication between the DM client and the DM server, and transmission of unnecessary messages can be avoided.

Please note that, a spirit of the process 30 is that a DM client uses only one message to complete a task, for reducing message transmission between the DM client and the DM server, to save transmission resource needed for completing the task. Realization of the process 30 is not limited.

For example, the identifier can be a command and/or a value. In detail, the DM client may use both the command and the value, to indicate the DM server not to reply a result of processing the data. Thus, after receiving the message, the DM server only processes the data and does not reply the result to the DM client, according to the command and the value. Alternatively, the DM client may only use the value to to indicate the DM server not to reply the result of processing the data. Thus, after receiving the message, the DM server only processes the data and does not reply the result to the DM client, according to the value. In this situation, the command is not used for the identifier, and the command may be a normal command such as update, replace, get, etc., such that the DM server can process the data according to the command. For example, the data is a value, and the DM server updates the value in a node. In another example, the identifier may be a tag <Final> defined in the DM protocol. Thus, after receiving the message, the DM server only processes the data and does not reply the result to the DM client, according to the tag <Final>.

An example of the message described above can be illustrated as follows:

```
 <Alter>
    <Data> 1230 </Data>
 <Item>
    data
    </Item>
    </Alter>
 
    or
    1230
    <Replace>
    <Item>
  data
  </Item>
  </Replace>
 
  or
 
  <Command>
  <Final/>
  </Command>.
```

According to the message, the DM client can use both the command "<Alter>" and the value "1230" as the identifier, and the DM server does not reply the result after detecting the command "<Alter>" and the value "1230". Alternatively, the DM client can use only the value "1230" as the identifier, and the DM server does not reply the result after detecting the value "1230". In this situation, the DM server can process the data according to a command "<Replace>". In another example, the DM client can use the tag "<Final>" as the identifier, and the DM server does not reply the result after detecting the tag "<Final>".

Please note that, detail of transmission of the message is not limited. For example, the DM client can transmit the message to the DM server via a transmission control protocol (TCP), a user datagram protocol (UDP), a short message service (SMS) protocol or a wireless application protocol (WAP) push. Besides, the message may further comprise authentication data identifying the DM client, such that the DM server knows who transmit the message. Preferably, before processing the data, the DM server determines whether to process the data, according to authority of the DM client. Since the DM client may not be allowed to require the DM server to process the data (e.g., according to the command), it is better for the DM server to check the authority of the DM client first. On the other hand, the DM client can generate the message according to an extensible Markup Language (XML) format, a type-length-value (TLV) format or a plain text format. That is, the DM client encodes the message by using the XML format, the TLV format or the plain text format.

Those skilled in the art should readily make combinations, modifications and/or alterations on the abovementioned examples. The abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present invention provides a method for reducing message transmission for completing a task between a DM client and a DM server. Thus, transmission resource needed for completing the task can be saved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of reducing message transmission for a device management (DM) client in a service system, the method comprising:
generating a message comprising data and an identifier, and the identifier indicating a DM server of the service system to not reply a result of processing the data; and
transmitting the message to the DM server, for the DM server to process the data.

2. The method of claim 1, wherein the identifier comprises a command.

3. The method of claim 2, wherein the identifier further comprises a value.

4. The method of claim 1, wherein the identifier comprises a value.

5. The method of claim 4, wherein the message further comprises a command, and the DM server processes the data according to the command.

6. The method of claim 1, wherein the identifier is a tag <Final> defined in the DM protocol.

7. The method of claim 1, wherein the DM client transmits the message to the DM server via a transmission control protocol (TCP), a user datagram protocol (UDP), a short message service (SMS) protocol or a wireless application protocol (WAP) push.

8. The method of claim 1, wherein the message further comprises authentication data identifying the DM client.

9. The method of claim 1, wherein the DM server determines whether to process the data according to authority of the DM client, before processing the data.

10. The method of claim 1, wherein the DM client generates the message according to an eXtensible Markup Language (XML) format, a type-length-value (TLV) format or a plain text format.
